# EUROPÄISCHE PATENTSCHRIFT

(11) **EP 0 449 840 B1**
(45) Veröffentlichungstag und Bekanntmachung des Hinweises auf die Patenterteilung: **20.04.1994**
(21) Anmeldenummer: 89912205.5
(22) Anmeldetag: 31.10.1989
(51) Int. Cl.: A21C 5/04, A21C 7/01

(54) **VORRICHTUNG ZUM WIRKEN VON PORTIONIERTEN TEIGSTÜCKEN**
DEVICE FOR KNEADING PORTIONED DOUGH PIECES
DISPOSITIF POUR LE PETRISSAGE DE QUANTITES DE PATE PREPORTIONNEES

(30) Priorität: 20.12.1988 AT 3108/88
(43) Veröffentlichungstag der Anmeldung: 09.10.1991
(73) Patentinhaber: König, Elisabeth, A-8045 Graz (AT)
(72) Erfinder: König, Elisabeth, A-8045 Graz (AT)
(74) Vertreter: Wildhack, Helmut, Dipl.-Ing. Dr.
(86) Internationale Anmeldenummer: AT8900096
(87) Internationale Veröffentlichungsnummer: WO9006683

(56) Entgegenhaltungen:
- AT-B- 363 411
- DE-A- 2 462 915
- US-A- 1 960 367

## Beschreibung

Die Erfindung bezieht sich auf eine Vorrichtung zum Wirken von portionierten Teigstücken, mit einem Gestell, in dem eine um eine horizontale Achse kontinuierlich umlaufende Trommel gelagert ist, die an ihrem Mantel mit Aufnahmeöffnungen für die Teigstücke versehen ist, und mit einem an einem, vorzugsweise oberhalb der Trommel befindlichen, Träger gelagerten Wirkwerkzeug, das mit einer Vertiefung versehen ist, die beim Wirkvorgang eine kreisende Bewegung relativ zur benachbarten Aufnahmeöffnung vollführt und zusätzlich zu dieser Bewegung beim Wirkvorgang mit der Umfangsbewegung der Trommel mitbewegt wird.

Bei einer solchen bekannten Vorrichtung (US-PS 1 960 367) ist das Wirkwerkzeug eine Platte, die von dem als Schwenkarm gebildeten Träger getragen ist. Dieser Träger ist um die Achse der Trommel schwenkbar und wird mit der kontinierlichen Bewegung der Trommel von einer Ausgangsstellung bis in eine Endstellung mitverschwenkt, wobei während dieser Schwenkbewegung der Wirkvorgang erfolgt. Sobald die Endstellung erreicht ist, wird der Schwenkarm unter Federeinwirkung wieder in seine Ausgangsstellung zurückgeführt. Eine solche Vorrichtung hat zwar den Vorteil, daß für den Wirkvorgang relativ viel Zeit zur Verfügung steht, so daß das Wirkergebnis befriedigt. Nachteilig ist jedoch die schlagartige Rückführung des Trägers in seine Ausgangslage, da hiebei nicht nur störendes Maschinengeräusch entsteht, sondern vor allem schlagartige Beanspruchungen der Maschine, die zum vorzeitigen Verschleiß bzw. Bruch von Bauteilen führen können. Außerdem ist nachteilig, daß ein Teil der Antriebsleistung der Maschine für die Spannung der Feder benötigt wird, welche nach Freigabe den Schwenkarm wieder in seine Ausgangslage zurückführt, was bedeutet, daß ein Teil der aufgewendeten Energie nutzlos verlorengeht.

Die Erfindung setzt sich zur Aufgabe, eine Vorrichtung der eingangs geschilderten Art so zu verbessern, daß diese Nachteile bei Beibehaltung oder sogar noch Steigerung des Wirkergebnisses vermieden sind, so daß die Lebensdauer der Vorrichtung gegenüber der eingangs geschilderten bekannten Konstruktion wesentlich erhöht und das Maschinengeräusch herabgesetzt wird. Die Erfindung löst diese Aufgabe dadurch daß das Wirkwerkzeug ein mit mehreren Vertiefungen versejenes Band ist, das zur Umlaufbewegung in Richtung des Umlaufes der Trommel derart angetrieben ist, daß stets eine seiner Vertiefungen einer Aufnahmeöffnung der Trommel gegenüberliegt, und daß dieses Band über zumindest zwei am Träger angeordnete, in Umfangsrichtung der Trommel relativ zueinander versetzte Umlenkstellen, vorzugsweise Umlenkwalzen, geführt und zu einer kreisenden Wirkbewegung seiner Vertiefung relativ zur Aufnahmeöffnung der Trommel angetrieben ist, wobei der Träger im Gestell normal zur Laufrichtung des Bandes verschiebbar gelagert ist. Durch die Umlaufbewegung des Bandes steht für die jeweils nachfolgende Aufnahmeöffnung der Trommel eine neue Vertiefung des Bandes zur Durchführung des Wirkvorganges zur Verfügung, ohne daß das Band in eine Ausgangslage rückgeführt werden muß, wie es beim Träger der eingangs geschilderten bekannten Konstruktion nötig ist. Die jeweils wirksame Vertiefung des Bandes läuft mit der ihr zugeordneten Aufnahmeöffnung der Trommel mit und vollführt relativ zu dieser die für den Wirkvorgang erforderliche Kreisbewegung. Diese Vertiefung bleibt im wesentlichen so lange wirksam, bis das Band über die - in Umlaufrichtung der Trommel gesehen - nachfolgende Umlenkstelle geführt und somit das Band mit seiner Vertiefung vom Trommelumfang entfernt wird. Die normal zur Trommelachse bzw. normal zur Laufrichtung des Bandes gerichtete Verschiebbarkeit des Trägers ist erforderlich, um die erwähnte Kreisbewegung des Bandes zuzulassen. Diese Kreisbewegung könnte im Rahmen der Erfindung dadurch hervorgerufen werden, daß der Träger des Bandes nicht nur normal zur Laufrichtung des Bandes verschiebbar ist, sondern auch in dieser Laufrichtung, wobei sich die beiden Bewegungskomponenten durch einen geeigneten Antrieb zu einer kreisenden Bewegung des Trägers und damit des Bandes ergänzen. Konstruktiv einfacher und für den Träger schonender ist es jedoch, gemäß einer Weiterbildung der Erfindung das Band zusätzlich zu seiner Umlaufbewegung zu einer dieser überlagerten, mit ihr gleichgerichteten Hin- und Herbewegung anzutreiben, und den Träger durch einen Antrieb zu einer hiezu normal gerichteten Hin- und Herbewegung anzutreiben, wobei sich die Hin- und Herbewegung des Bandes mit der durch die Verschiebung des Trägers bewirkten Querverschiebung des Bandes zu dessen kreisender Wirkbewegung ergänzt. Mit anderen Worten: Es wird der Umlaufbewegung des Bandes und dessen über den Träger hervorgerufener, in Trommelachsrichtung gerichteten Bewegung eine weitere Bewegung des Bandes überlagert, die eine Verzögerung bzw. Beschleunigung der Umlaufbewegung des Bandes zur Folge hat, wobei diese überlagerte Bewegung zusammen mit der über die Trägerverschiebung bewirkten Bandbewegung die kreisende Wirkbewegung des Bandes ergibt.

Die Umlaufbewegung des Bandes kann durch Antrieb zumindest einer der Umlenkwalzen erzielt werden. Um einen Schlupf mit Sicherheit zu vermeiden, ist es jedoch günstiger, im Rahmen der Erfindung die Anordnung so zu treffen, daß das Band Mitnehmer, z.B. eine Lochreihe oder eine Riffelung, aufweist oder mit einem Mitnehmer aufweisenden Bauteil, z.B. einer Gliederkette verbunden ist, welche Mitnehmer von einem an Träger gelagerten, zur Drehbewegung angetriebenen Antriebsrad, z.B. einem Zahnrad, für die Umlaufbewegung des Bandes angetrieben sind. Damit wird stets die gewünschte Bewegung des Bandes sichergestellt. Eine besonders einfache Ausführungsform besteht erfindungsgemäß hiebei darin, daß das Zahnrad koaxial zu einer der Umlenkwalzen angeordnet und vorzugsweise von dieser angetrieben ist.

Zweckmäßig liegt das Untertrum des Bandes nicht am Trommelumfang an, sondern es ist das Band durch zumindest eine am Träger befestigte Kulisse in Abstand vom Umfang der Trommel geführt. Dies ergibt eine Schonung des Bandes. Der Abstand kann, doch muß nicht, über die wirksame Länge des Bandes gleich sein. So kann sich dieser Abstand mit Fortschreiten des Wirkvorganges vergrößern, um dem im Laufe des Wirkvorganges erhöhten Platzbedarf Rechnung zu tragen, welcher durch den Übergang des Teigstückes zur Kugelform hervorgerufen wird.

Das Band kann ein von mehreren Platten gebildetes Gliederband sein, wobei die Platten an ihrer einen Seite mit die Vertiefungen bildenden Ausnehmungen versehen sind. Zur Gewichtserleichterung bestehen diese Platten zweckmäßig aus Leichtmetall, vorzugsweise Aluminium. Es kann jeweils eine Vertiefung an einer Platte angeordnet sein. Um einen leichteren Umlauf des Bandes über die Umlenkstellen zu erreichen, ist es jedoch zweckmäßig, die einzelnen Platten verhältnismäßig schmal auszubilden, so daß in der Regel die eine gemeinsame Vertiefung bildenden Ausnehmungen über mehr als eine Platte reichen.

Es kann jedoch im Rahmen der Erfindung das Band in vorteilhafter Weise auch von einem mit Vertiefungen versehenen Geweberiemen, vorzugsweise aus Kunststoff, gebildet sein, der vorzugsweise mit einer Verzahnung oder Lochreihe zur Mitnahme durch eine Verzahnung der angetriebenen Umlenkwalze versehen ist.

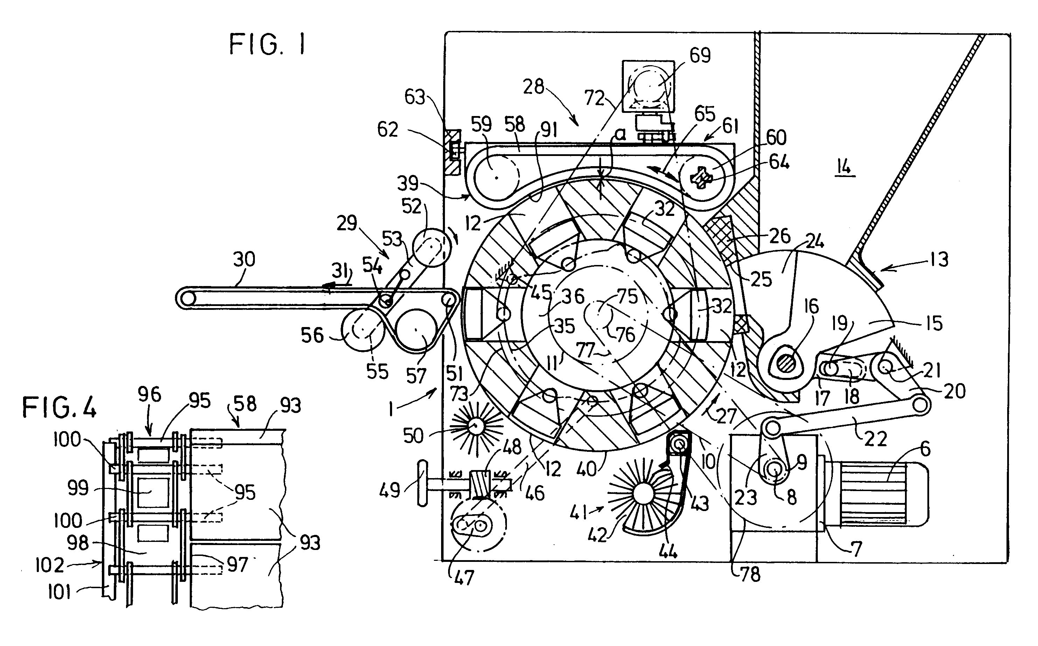

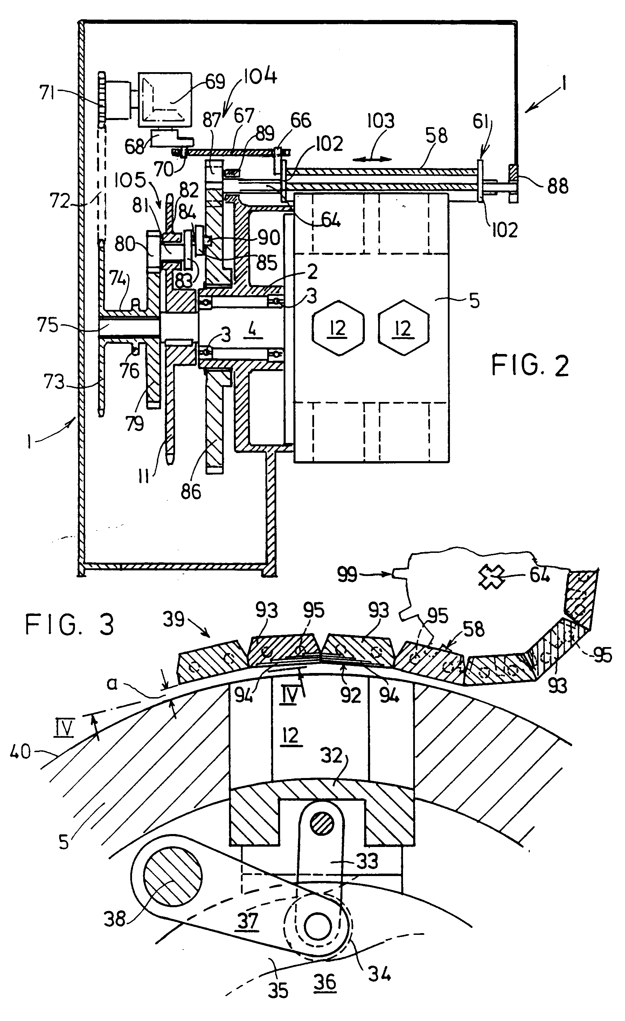

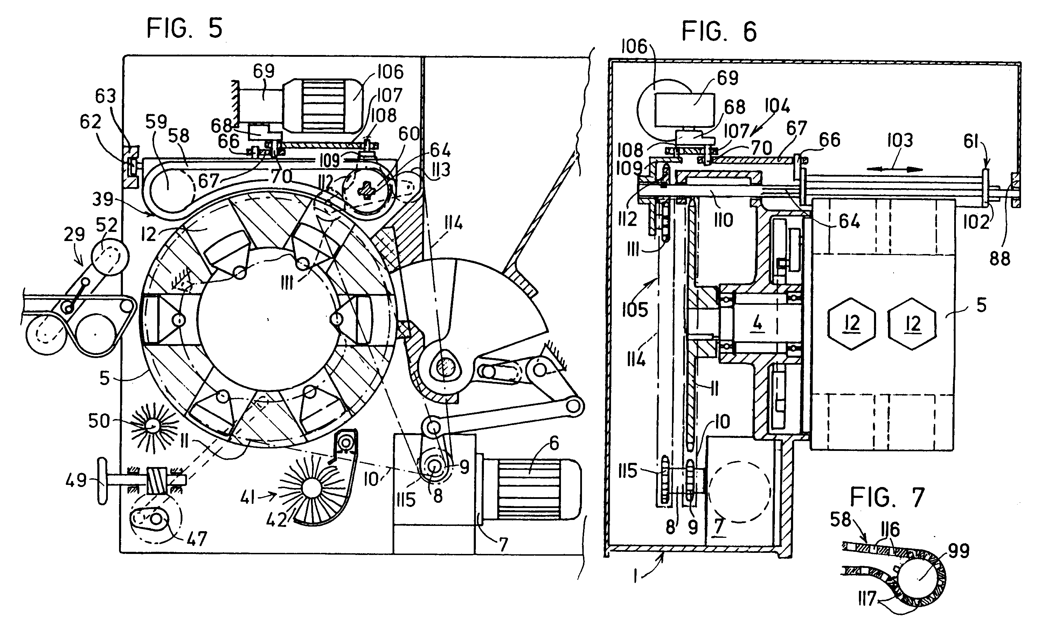

In der Zeichnung ist die erfindungsgemäße Vorrichtung an Hand von Ausführungsbeispielen schematisch dargestellt. Fig.1 zeigt eine erste Ausführungsform der Vorrichtung in Vertikalschnitt normal zur Trommelachse. Fig.2 zeigt eine etwas abgewandelte Ausführungsform im Schnitt durch die Trommelachse, Fig.3 in größerem Maßstab ein Detail der Ausbildung und Umlenkung des als Gliederband ausgebildeten Bandes und Fig.4 ist ein Schnitt nach der Linie IV-IV der Fig.3. Fig.5 zeigt ein weiteres Ausführungsbeispiel der Vorrichtung im Vertikalschnitt normal zur Trommelachse, wobei Fig.6 ein Vertikalschnitt durch die Trommelachse zu Fig.5 ist. Fig.7 zeigt ein Detail im Schnitt.

In einen Gestell 1 ist ein Rohrstück 2 (Fig.2) mit horizontaler Achse angeordnet, in welchem mittels zweier Wälzlager 3 die Welle 4 einer Trommel 5 mit horizontaler Achse gelagert ist. Diese Trommel 5 ist von einem Elektromotor 6 (Fig.1) mit regelbarem Getriebe 7 zur kontinuierlichen Umlaufbewegung angetrieben. Hiezu ist auf die Abtriebswelle 8 des Getriebes 7 ein Zahnrad 9 aufgekeilt, welches über eine Kette 10 eine auf die Welle 4 der Trommel 5 aufgekeilte Zahnscheibe 11 (Fig.2) antreibt. Die Trommel 5 ist an ihrem Umfang mit mehreren Aufnahmeöffnungen 12 mit Sechseckquerschnitt versehen, welche in mehreren parallel zur Trommelachse verlaufenden Reihen, im dargestellten Ausführungsbeispiel in sechs Reihen zu je zwei Öffnungen 12, angeordnet sind, die in gleichem Abstand - gemessen in Umfangsrichtung der Trommel 5 - voneinander liegen. In diese Aufnahmeöffnungen 12 wird an einer Portionierstelle 13 (Fig.1) Teig eingedrückt, der über einen Trichter 14 zugeführt wird. Hiezu dient ein Eindrückglied 15, das auf einer Welle 16 unverdrehbar befestigt ist, die im Gestell 1 drehbar gelagert ist. An der Welle 16 ist ein Schwenkhebel 17 starr befestigt, der mit einer Kulisse 18 versehen ist, in der ein Zapfen 19 eines Doppelhebels 20 gleitet, der um eine Anlenkstelle 21 im Gestell 1 schwenkbar gelagert ist und an seinem anderen Ende mit einem Pleuel 22 gelenkig verbunden ist, das an eine Kurbel 23 angelenkt ist, die auf der Abtriebswelle 8 des Motors 6 befestigt ist. Das Eindrückglied 15 vollführt eine taktweise Schwenkbewegung um die Achse der Welle 16, durch welche der Teig über eine Öffnung 24 in die an der Portionierstelle 13 vorbeistreichenden Aufnahmeöffnungen 12 eingedrückt wird. Eine Abscherkante 25 streicht den überschüssigen Teig ab, sie ist an einer auswechselbaren Brille 26, zweckmäßig aus Kunststoff, angeordnet, die seitlich aus dem Gestell 1 herausziehbar ist, um eine leichte Reinigungsmöglichkeit zu schaffen.

Die Portionierstelle 13 ist, wie Fig.1 zeigt, an jener Seite der Trommel 5 angeordnet, an welcher sich die Aufnahmeöffnungen 12 nach oben bewegen, da die Trommel 5 in Richtung des Pfeiles 27 umläuft. Im Bereich des Scheitels der Trommel 5 befindet sich eine Wirkstelle 28, an welcher die in den Aufnahmeöffnungen 12 liegenden Teigstücke einem Wirkvorgang unterworfen werden, und an der der Portionierstelle 13 gegenüberliegenden Seite der Trommel 5 ist eine Ablegestelle 29 angeordnet, an welcher die Teigstücke aus den Aufnahmeöffnungen 12 auf ein in Richtung des Pfeiles 31 umlaufendes Förderband 30 abgelegt werden.

In jeder Aufnahmeöffnung 12 befindet sich ein Kolben 32, der in radialer Richtung der Trommel 5 in der betreffenden Aufnahmeöffnung 12 verschiebbar ist. Jeder Kolben 32 trägt an seiner der Trommelachse zugewendeten Seite eine gelenkig befestigte Lasche 33 (Fig.3), die an ihrem inneren Ende eine Rolle 34 trägt, die in einer umlaufenden Nut 35 einer Kurvenscheibe 36 sitzt, die in der Trommel 5 verstellbar angeordnet ist. Weiters ist das innere Ende jeder Lasche 33 gelenkig mit einer weiteren Lasche 37 verbunden, die an der Trommel 5 mittels eines Zapfens 38 angelenkt ist. Dadurch ergibt sich für jeden Kolben 32 eine solche Stellung in seiner Aufnahmeöffnung 12, welche durch den Abstand jener Stelle der Nut 35 von der Achse der Trommel 5 bestimmt ist, an welcher sich die jeweilige Rolle 34 befindet. Dieser Abstand ändert sich während des Umlaufes der Trommel 5, da die Nut 35 einen gekrümmten Verlauf hat, etwa wie folgt: An der Portionierstelle 13 (Fig.1) erfolgt ein Zurückziehen des Kolbens 32 in der Aufnahmeöffnung 12, um Platz für den durch das Eindrückglied 15 in die Aufnahmeöffnung 12 eingedrückten Teig zu schaffen. Das Maß, um welches der Kolben 32 hiebei zurückgezogen wird, bestimmt das Volumen des an der Portionierstelle 13 portionierten Teigstückes pro Aufnahmeöffnung 12. Im Verlaufe des weiteren Umlaufes der Trommel 5 bleibt der Kolben 32 im wesentlichen in seiner zurückgezogenen Lage, bis die betreffende Aufnahmeöffnung 12 in den Bereich der Wirkstelle 28 gelangt. Sodann wird zu Beginn des Wirkvorganges der Kolben 32 etwas vorgeschoben, um das zu wirkende Teigstück an das später noch näher beschriebene Wirkwerkzeug 39 (Fig.1) anzudrücken. Sodann erfolgt im Verlaufe des Vorbeilaufens der Aufnahmeöffnung 12 an der Wirkstelle 28 eine kontinuierliche Zurückziehung des Kolbens 32, um dem Teigstück in der Aufnahmeöffnung 12 Gelegenheit zu geben, im Verlaufe des Wirkvorganges eine kugelige Form anzunehmen, die mehr Platz benötigt. Sobald die Aufnahmeöffnung 12 vor der Ablagestelle 29 angelangt ist, wird der Kolben 32 bis zum Umfang 40 der Trommel 5 vorgeschoben, so daß das fertig gewirkte Teigstück aus der Aufnahmeöffnung 12 ausgestoßen und auf das Förderband 30 abgelegt wird. Im Verlaufe der weiteren Umdrehung der Trommel 5 verbleibt der Kolben 32 zunächst in der vorgeschobenen Stellung, bis er im Bereich des unteren Trommelscheitels wieder etwas zurückgezogen wird, um die Innenwand der Aufnahmeöffnung 12 für eine wirksame Bemehlung freizugeben, wofür eine Bemehlungsvorrichtung 41 unterhalb der Trommel 5 vorgesehen ist, die aus einer umlaufenden Bürste 42 besteht, der Mehl von einer Schnecke 43 zugeführt wird. Die Borsten der Bürste streifen an einer Gehäusekante 44 an und schleudern dadurch das Mehl gegen die vorbeilaufende Aufnahmeöffnung 12.

Nach Passieren der Bemehlungsvorrichtung 41 gelangt die Aufnahmeöffnung 12 wieder zur Portionierstelle 13 und der Zyklus beginnt von Neuem.

Die entsprechende Form der Nut 35 ist in Fig.1 strichpunktiert eingezeichnet.

Das Maß, um welches der Kolben 32 an der Portionierstelle 13 zurückgezogen wird, ist zur Veränderung des Gewichtes des portionierten Teigstückes einstellbar. Hiezu ist die Kurvenscheibe 36 an einer Stelle 45 (Fig.1) im Gestell 1 schwenkbar angelenkt und mit einer Pleuelstange 46 gelenkig verbunden, deren anderes Ende mit einer im Gestell 1 drehbar gelagerten Kurbel 47 gelenkig verbunden ist, die mittels eines Schneckentriebes 48 von einem Handrad 49 aus verstellbar ist.

Statt der Bemehlungsvorrichtung 41 kann auch eine Beölungsvorrichtung treten, die eine Pumpe für das zuzuführende Öl aufweist, das mittels einer Düse von unten gegen die Trommel 5 gespritzt wird.

Eine im Gestell 1 gelagerte, zur Drehbewegung angetriebene Bürste 50 streift am Umfang 40 der Trommel 5 anhaftende Teigreste ab.

Zur Erleichterung der Übergabe des fertig gewirkten Teigstückes auf das Förderband 30 ist dieses nahe der Trommel 5 über eine kleine Umlenkwalze 51 geführt, oberhalb welcher eine Andrückwalze 52 an einem Arm 53 drehbar gelagert ist, welcher Arm in seiner Neigung mittels eines Exzenters 54 verstellbar ist, so daß der Abstand zwischen der Trommel 5 und der Andrückwalze 52 einstellbar ist. Die Andrückwalze 52 ist mittels eines Zahnriemens 55 von einer unterhalb des Förderbandes 30 angeordneten Spannwalze 56 angetrieben, über deren Umfang das Förderband 30 geführt ist. Eine weitere Walze 57 sichert einen entsprechend großen Umschlingungswinkel des Förderbandes 30 an der Spannwalze 56. Die Andrückwalze 52 zieht das aus der Aufnahmeöffnung 12 ausgestoßene Teigstück von der Trommel 5 weg

Das Wirkwerkzeug 39 ist von einem endlosen Band 58 gebildet, das über zwei Umlenkwalzen 59,60 geführt ist, die in großem Abstand voneinander (gemessen in Umfangsrichtung der Trommel 5) mit zur Trommelachse parallelen Achsen an einem gemeinsamen Träger 61 drehbar gelagert sind. Dieser Träger ist in Richtung der Achse der Welle 4 der Trommel 5 im Gestell 1 verschiebbar gelagert und trägt hiezu an seinem über der Ablagestelle 29 liegenden Rand zumindest zwei Rollen 62, die in einer U-förmigen Führungsschiene 63 des Gestelles 1 laufen. Weiters ist der Träger 61 mit seiner Umlenkwalze 60 in der gleichen Richtung verschiebbar auf eine als Vielkantwelle ausgebildete Profilwelle 64 aufgesetzt (Fig.1,2). Diese Hin- und Herverschiebung des Trägers 61 in Richtung der Achse der Trommel 5 ist durch einen Doppelpfeil 103 in Fig.2 angedeutet. Sie wird durch einen Antrieb 104 hervorgerufen, wobei der Träger 61 einen vertikalen Zapfen 66 (Fig.2) trägt, der mittels eines Pleuels (67) mit einem Exzenterzapfen 70 einer Kurbel 68 verbunden ist, die über ein Kegelradgetriebe 69 von einem Kettenrad 71 angetrieben wird. Dieses Kettenrad 71 wird über eine Kette 72 von einer größeren Zahnscheibe 73 angetrieben, die auf einer Hülse 74 sitzt, welche drehbar auf eine Verlängerung 75 der Welle 4 der Trommel 5 aufgesetzt ist und ein Kettenrad 76 trägt, das über eine Kette 77 (Fig.1) von einem größeren Kettenrad 78 angetrieben wird, das auf die Abtriebswelle 8 des vom Motor 6 angetriebenen Getriebes 7 aufgekeilt ist.

Als Antrieb 105 für die Drehbewegung der Profilwelle 64 trägt die Hülse 74 an ihrem der Trommel 5 zugewendeten Ende ein Zahnrad 79, das mit einem Ritzel 80 kämmt, das an einem Stirnende einer kleinen Welle 81 sitzt, die in einem Flansch 82 der Zahnscheibe 11 drehbar gelagert ist und an ihrem anderen Ende eine Kurbel 83 trägt, deren Exzenterzapfen 84 mittels eines Pleuels 85 an einem Mitnehmer 90 eines Zahnrades 86 angelenkt ist, das drehbar auf das Rohrstück 2 aufgesetzt ist. Dieses Zahnrad 86 kämmt mit einem Ritzel 87, das am einen Stirnende der Profilwelle 64 sitzt, welches Ende in einem Flansch 89 des Gestelles 1 gelagert ist, wogegen das andere Ende der Profilwelle 64 in einem Lager 88 des Gestelles 1 drehbar gelagert ist. Die Zahnscheibe 11 wird - wie bereits erwähnt - über die Kette 10 vom Motor 6 angetrieben.

Dadurch wird die Profilwelle 64 zu einer aus zwei Komponenten zusammengesetzten Drehbewegung angetrieben: Die eine Komponente ist die Drehbewegung der Zahnscheibe 11, welche über den Mitnehmer 90 auf das Zahnrad 86 und damit auf die Profilwelle 64 übertragen wird. Die andere Komponente wird durch die Drehbewegung der Kurbel 83 erzeugt, die ebenfalls über den Mitnehmer 90 auf das Zahnrad 86 übertragen wird und eine Hin- und Herbewegung dieses Zahnrades 86 zur Folge hat, die sich der reinen Drehbewegung der Zahnscheibe 11 überlagert. Diese Hin- und Herbewegung bewirkt eine laufende Beschleunigung bzw. Verzögerung der Rotation des Ritzels 87, so daß die Profilwelle 64 mit periodisch variierender Drehzahl angetrieben wird. Diese Rotation der Profilwelle 64 setzt sich mit der durch den Antrieb 104 erzeugten, in Richtung des Doppelpfeiles 65 erfolgenden Hin- und Herbewegung des Trägers 61 zu einer kreisenden Bewegung des das Wirkwerkzeug 39 bildenden Bandes 58 zusammen.

Die über die Zahnscheibe 11 auf die Profilwelle 64 ausgeübte Antriebskomponente muß durch geeignete Wahl der Übersetzungen der Zahnräder so gewählt sein, daß das Band 58 - abgesehen von seiner kreisenden Wirkbewegung - mit derselben Umfangsgeschwindigkeit umläuft wie der Umfang 40 der Trommel 5. Die Amplitude und Geschwindigkeit der kreisenden Wirkbewegung wird den vorliegenden Gegebenheiten entsprechend gewählt. Änderungen dieser Bewegung sind durch Änderungen der Übersetzungen der Antriebe 104,105, welche auf den Träger 61 bzw. das Band 58 für die Wirkbewegung einwirken, möglich.

Zur Durchführung des Wirkvorganges hat das Band 58 an seiner Außenfläche 91, welche dem Umfang 40 der Trommel 5 zugewendet ist, mehrere in gleichmäßigen Abständen voneinander liegende Vertiefungen 92 (Fig.3), deren Wände stufenförmig abgesetzt sind, um einen guten Angriff auf das Teigstück während der kreisenden Wirkbewegung des Wirkwerkzeuges 39 zu sichern. Diese Vertiefungen 92 können in ein kontinuierliches Band, etwa aus Kunststoff, eingearbeitet sein, oder es ist, wie Fig.3 zeigt, das Band aus einer Vielzahl von Platten 93 als Gliederband zusammengesetzt. Da das Band 58 um die Umlenkwalzen 59,60 geführt werden muß, ist es zweckmäßig, die in Umlaufrichtung gemessene Breite der Platten 93 nicht zu groß zu wählen, um keine Schwierigkeiten bei der Bandumlenkung zu haben. Da die Vertiefungen 92 mit ihrem größten Durchmesser nicht viel kleiner sein sollen als die größte Querabmessung der Aufnahmeöffnung 12, ist es zweckmäßig, die Vertiefungen 92 jeweils über zwei einander benachbarte Platten 93, gegebenenfalls sogar über drei oder vier solche Platten, zu verteilen, wobei jede Platte 93 Ausnehmungen 94 hat, die sich zur Vertiefung 92 zusammensetzen. Jede Platte 93 (Fig.3,4) ist an beiden Stirnenden mit zwei in sie eingesetzten Bolzen 95 versehen, welche die Gelenkbolzen einer Gliederkette 96 bilden, die das Band 58 an dessen Seitenrand 97 begleitet und einerseits zum Antrieb des Bandes für dessen Umlaufbewegung dient, anderseits zur Führung des Bandes 58 derart, daß dieses in einem vorbestimmten Abstand a (Fig.1,3) vom Umfang 40 der Trommel 5 gehalten wird. Hiezu bildet die Gliederkette 96 eine Lochreibe 98, in deren Löcher die Zähne eines das Antriebsrad 99 für das Band 58 bildenden Zahnrades (Fig.3,4) eingreifen, welches Zahnrad 99 zur Drehbewegung im Rhythmus der Profilwelle 64 angetrieben ist. Zweckmäßig sitzt hiezu das Zahnrad 99 unverdrehbar auf dieser Profilwelle 64, jedoch in deren Längsrichtung verschiebbar, um die Querverschiebung des Trägers 61 zuzulassen, in welchem das Zahnrad 99 angeordnet ist. Durch diesen Zahnradantrieb wird gesichert, daß das Band 58 stets mit der Trommel 5 richtig mitläuft und daß sich stets eine Aufnahmeöffnung 12 unter einer zur Durchführung des Wirkvorganges dienenden Vertiefung 92 befindet.

Die erwähnte Führung des Bandes 58 im Abstand a vom Trommelumfang wird dadurch gesichert, daß die Bolzen 95 mit über die Gliederkette 96 seitlich hinausragenden Fortsätzen 100 versehen sind, die in einer Längsnut 101 gleiten, welche eine Kulisse bildet, die in einer das Band 58 seitlich begleitenden Wange 102 des Trägers 61 vorgesehen ist. Zweckmäßig sind an beiden Seitenrändern 97 des Bandes 58 solche, eine Führung bildende Längsnuten 101 vorgesehen.

Das in die Aufnahmeöffnung 12 an der Portionierstelle 13 eingedrückte Teigstück wird schon bald nach der Abscherkante 25 unter das Wirkwerkzeug 39 gebracht, welches sich über einen erheblichen Umfangsabschnitt der Trommel 5 erstreckt, zweckmäßig über zumindest 45°, vorzugsweise etwa 60 bis 80°. Dadurch steht für den Wirkvorgang ein langer Zeitabschnitt zur Verfügung, so daß einwandfrei gewirkte Teigportionen an der Ablegestelle 29 auf das Förderband abgelegt werden. Es lassen sich sehr kurze Taktzeiten erreichen, so daß die Vorrichtung eine hohe Leistungsfähigkeit aufweist, z.B. 50 bis 60 Hübe pro Minute.

Bei der Ausführungsform nach den Fig.5 und 6 ist der Antrieb der Trommel 5 im wesentlichen gleich ausgebildet wie bei der Ausführungsform nach den Fig.1 bis 4. Unterschiedlich ist jedoch die Ausbildung des Antriebes 104 für die Hin- und Herbewegung des Trägers 61 in Richtung des Doppelpfeiles 103 und der Antrieb 105 für die mit einer oszillierenden Komponente überlagerte Drehbewegung der Profilwelle 64, welche oszillierende Komponente synchron zur Hin- und Herbewegung des Trägers 61 erfolgt. Beide Antriebe 104, 105 erhalten ihre Energie von einem gemeinsamen, im Gestell 1 angeordneten Motor 106, der das Kegelradgetriebe 69 antreibt. Von dessen Abtriebswelle erfolgt die Hin- und Herverschiebung des Trägers 61 in Richtung des Doppelpfeiles 103 mitttels der Kurbel 68, des Exzenterzapfens 70 und des Pleuels 67 wie bei der Ausführungsform nach den Fig.1 bis 5 beschrieben. Mit dem Exzenterzapfen 70 ist jedoch das eine Ende eines weiteren Pleuels 107 gelenkig verbunden, dessen anderes Ende mit einem Zapfen 108 gelenkig verbunden ist, der auf einem Schwingarm 109 sitzt, der auf einer als Rundwelle ausgebildeten Verlängerung 110 der Profilwelle 64 frei drehbar sitzt (Fig.6). Auf dem Schwingarm 109 sind drei Kettenräder 111,112,113 drehbar gelagert, über welche eine Kette 114 derart geführt ist, daß die Kette den oberen Umfangsteil der beiden äußeren Kettenräder 111,113 und den unteren Umfangsteil des mittigen Kettenrades 112 umschlingt. Diese Kette 114 wird von einem auf die Abtriebswelle des Hauptmotors 6 aufgesetzten, zum Kettenrad 9 koaxialen Kettenrad 115 angetrieben. Das mittige Kettenrad 112 ist mit der Verlängerung 110 der Profilwelle 64 drehschlüssig verbunden. Die konstante Komponente der Drehbewegung der Profilwelle 64 erfolgt somit über die Kette 114, die dieser Komponente überlagerte oszillierende Komponente über den Schwingarm 109, denn die beiden äußeren, Umlenkkettenräder bildenden Kettenräder 111,113 werden über die Kette 114 an und für sich mit kontinuierlicher Winkelgeschwindigkeit vom Antriebskettenrad 115 zur Weiterbewegung des Bandes 58 in Richtung des Umfanges der Trommel 5 angetrieben, jedoch wird dieser Bewegung die oszillierende Bewegung des Schwingarmes 109 überlagert, welche in eine oszillierende Antriebsbewegung des mittleren Kettenrades 112 und damit der Profilwelle 64 umgeformt wird.

Der Antrieb der Trommel 5 erfolgt von der Abtriebswelle 8 des Hauptmotors 6 über das Kettenrad 9, die Kette 10 und die mit der Welle 4 der Trommel verkeilte Zahnscheibe 11. Die Durchmesserverhältnisse der Kettenräder 9,11,115,112 müssen so aufeinander abgestimmt sein, daß sich beim Umlauf der Trommel 5 stets eine Vertiefung 92 über einer Aufnahmeöffnung 12 zur Durchführung des Wirkvorganges befindet.

Der Motor 106 kann mit variabler Geschwindigkeit seiner Abtriebswelle betrieben werden oder es kann das Getriebe 69 ein Regelgetriebe sein. Dadurch läßt sich die Anzahl der Umdrehungen des Wirkwerkzeuges bzw. der Vertiefungen 92 des Wirkbandes 58, welche auf das in der Aufnahmeöffnung 12 befindliche Teigstück während des Wirkvorganges einwirken, verändern.

Das Band 58 kann auch - wie Fig.7 zeigt - ein Zahnriemen sein, der mit Mitnehmern zwecks Sicherung seiner Antriebsbewegung in Richtung des Umfanges der Trommel 5 versehen ist. Im dargestellten Ausführungsbeispiel sind diese Mitnehmer von einer Lochreihe 116 gebildet, die am Rand des Bandes 58 angeordnet ist und in welche eine Verzahnung 117 eingreift, die entweder unmittelbar auf der Umlenkwalze 60 sitzt oder auf einer drehschlüssig mit dieser bzw. der Profilwelle 64 verbundenen, das Antriebsrad bildenden Zahnrad 99. Anstelle der Lochreihe 116 und der Verzahnung 117 kann auch eine geeignete Riffelung des Bandes 58 bzw. der Umlenkwalze 60 dienen. Solche Bänder 58 lassen sich als, vorzugsweise aus Kunststoff, bestehende Geweberiemen leicht herstellen.

Bei entsprechend großen Anlagen wäre es möglich, mehr als vier Reihen, etwa sechs Reihen, Aufnahmeöffnungen 12 über den Umfang der Trommel 5 verteilt anzuordnen.

## Patentansprüche

1. Vorrichtung zum Wirken von portionierten Teigstücken, mit einem Gestell, in dem eine um eine horizontale Achse kontinuierlich umlaufende Trommel gelagert ist, die an ihrem Mantel mit Aufnahmeöffnungen für die Teigstücke versehen ist, und mit einem an einem, vorzugsweise oberhalb der Trommel befindlichen, Träger gelagerten Wirkwerkzeug, das mit einer Vertiefung versehen ist, die beim Wirkvorgang eine kreisende Bewegung relativ zur benachbarten Aufnahmeöffnung vollführt und zusätzlich zu dieser Bewegung beim Wirkvorgang mit der Umfangsbewegung der Trommel mitbewegt wird, dadurch gekennzeichnet, daß das Wirkwerkzeug (39) ein mit mehreren Vertiefungen (92) versehenes Band (58) ist, das zur Umlaufbewegung in Richtung des Umlaufes der Trommel (5) derart angetrieben ist, daß stets eine seiner Vertiefungen (92) einer Aufnahmeöffnung (12) der Trommel (5) gegenüberliegt, und daß dieses Band (58) über zumindest zwei am Träger (61) angeordnete, in Umfangsrichtung der Trommel (5) relativ zueinander versetzte Umlenkstellen, vorzugsweise Umlenkwalzen (59,60) geführt und zu einer kreisenden Wirkbewegung seiner Vertiefung (22) relativ zur Aufnahmeöffnung (12) der Trommel (5) angetrieben ist, wobei der Träger (61) im Gestell (1) normal zur Laufrichtung des Bandes (58) verschiebbar gelagert ist.

2. Vorrichtung nach Anspruch 1, dadurch gekennzeichnet, daß das Band (58) zusätzlich zu seiner Umlaufbewegung zu einer dieser überlagerten, mit ihr gleichgerichteten Hin- und Herbewegung angetrieben ist und daß der Träger (61) durch einen Antrieb (104) zu einer hiezu normal gerichteten Hin- und Herbewegung angetrieben ist, wobei sich die Hin- und Herbewegung des Bandes (58) mit der durch die Verschiebung des Trägers (61) bewirkten Querverschiebung des Bandes (58) zu dessen kreisender Wirkbewegung ergänzt.

3. Vorrichtung nach Anspruch 2, dadurch gekennzeichnet, daß das Band (58) Mitnehmer, z.B. eine Lochreihe (116) oder eine Riffelung, aufweist oder mit einem Mitnehmer aufweisenden Bauteil, z.B. einer Gliederkette (26) verbunden ist, welche Mitnehmer von einem am Träger (61) gelagerten, zur Drehbewegung angetriebenen Antriebsrad (99), z.B. einem Zahnrad, für die Umlaufbewegung des Bandes (58) angetrieben sind.

4. Vorrichtung nach Anspruch 3, dadurch gekennzeichnet, daß das Antriebsrad (99) koaxial zu einer der Umlenkwalzen (59, 60) angeordnet und vorzugsweise von dieser angetrieben ist.

5. Vorrichtung nach einem der Ansprüche 1 bis 4, dadurch gekennzeichnet, daß das Band (58) durch zumindest eine am Träger (61) befestigte Kulisse, z.B. eine Längsnut (101), im Abstand vom Umfang (40) der Trommel (5) geführt ist.

6. Vorrichtung nach Anspruch 5, dadurch gekennzeichnet, daß das Band (58) an zumindest einem seiner Seitenränder (97) mit einer Gliederkette (96) verbunden ist, die mit seitlichen Fortsätzen (100) versehen ist, die in einer Längsnut (101) einer das Band (58) seitlich begleitenden Wange (102) des Trägers (61) gleiten.

7. Vorrichtung nach einem der Ansprüche 1 bis 6, dadurch gekennzeichnet, daß am Träger (61) zwei Umlenkwalzen (59,60) für das Band (58) um zumindest jenem Abstand voneinander gelagert sind, um welchen zwei benachbarte Aufnahmeöffnungen (12) der Trommel (5) voneinander entfernt sind.

8. Vorrichtung nach Anspruch 7, dadurch gekennzeichnet, daß sich das Band (58) entlang des Umfanges (40) der Trommel (5) über zumindest 45°, vorzugsweise etwa 60 bis 80°, erstreckt.

9. Vorrichtung nach einem der Ansprüche 1 bis 8, dadurch gekennzeichnet, daß der Träger (61) auf einer parallel zur Welle (4) der Trommel (5) verlaufenden Profilwelle (64) in deren Längsrichtung verschiebbar gelagert ist, über welche die Einleitung der Energie für die Umlaufbewegung des Bandes (58) erfolgt und die im Gestell (1) drehbar gelagert und mit einem Antrieb verbunden ist.

10. Vorrichtung nach Anspruch 9, dadurch gekennzeichnet, daß der Träger (61) an seinem einen Ende auf der Profilwelle (64) verschiebbar gelagert ist und daß der Träger (61) an seinem anderen Ende mit Wälzkörpern, insbesondere Rollen (62), in einer parallel zur Profilwelle (64) verlaufenden Führung, insbesondere einer Führungsschiene (63), des Gestelles (1) gelagert ist.

11. Vorrichtung nach Anspruch 9 oder 10, dadurch gekennzeichnet, daß der Antrieb für die Hin- und Herbewegung des Trägers (61) einen mit diesem über ein Pleuel (67) verbundenen Exzenterzapfen (70) aufweist, der zur Umlaufbewegung von einem im oder am Gestell (1) angeordneten Motor (6) aus angetrieben ist.

12. Vorrichtung nach Anspruch 11, dadurch gekennzeichnet, daß der Exzenterzapfen (70) von einer auf die Welle (4) der Trommel (5) drehbar aufgesetzten Zahnscheibe (73) angetrieben ist, die drehschlüssig mit dem Zahnrad (79) verbunden ist, wobei vorzugsweise dieses Zahnrad (79) und die Zahnscheibe (73) auf einer auf die Welle (4) der Trommel (5) aufgesetzten Hülse (74) sitzen, die ebenso wie die mit der Welle (4) der Trommel (5) drehschlüssig verbundene Zahnscheibe (11) vom Motor (6) angetrieben ist.

13. Vorrichtung nach einem der Ansprüche 9 bis 12, dadurch gekennzeichnet, daß der Antrieb der Profilwelle (64) ein, vorzugsweise koaxial zur Welle (4) der Trommel (5) gelagertes, Zahnrad (86) hat, das mit einem mit der Profilwelle (64) verbundenen Ritzel (87) kämmt und über einen Mitnehmer (90) von einer mit der Welle (4) der Trommel (5) drehschlüssig verbundenen Scheibe, insbesondere einer Zahnscheibe (11) oder einem Kettenrad, zur Drehung mitgenommen wird, welcher Mitnehmer (90), gegebenenfalls mittels eines Pleuels (85), mit einem Exzenterzapfen (84) einer Kurbel (83) verbunden ist, die drehbar in der Scheibe (11) gelagert und von einem Antrieb zur Drehbewegung angetrieben ist.

14. Vorrichtung nach Anspruch 13, dadurch gekennzeichnet, daß der Antrieb für die Drehbewegung der Scheibe (11) ein auf die Welle (4) der Trommel (5) drehbar aufgesetztes Zahnrad (79) aufweist, das mit einem mit der Kurbel (83) verbundenen Ritzel (80) kämmt und von einem Antrieb für die Hin- und Herverschiebung des Trägers (61) angetrieben wird.

15. Vorrichtung nach einem der Ansprüche 1 bis 12, dadurch gekennzeichnet, daß der Antrieb (105) des Bandes (58) zu seiner der Umlaufbewegung überlagerten Hin- und Herbewegung einen am Träger (61) schwenkbar gelagerten Schwingarm (109) aufweist, auf welchem ein Antriebsrad, vorzugsweise ein Kettenrad (112), für den Antrieb des Bandes (58) in Umfangsrichtung der Trommel (5) drehbar gelagert ist, und daß Mittel für die Verschwenkung des Schwingarmes (109) im Takt der Verschiebung des Trägers (61) vorhanden sind.

16. Vorrichtung nach Anspruch 15, dadurch gekennzeichnet, daß die Mittel zur Verschwenkung des Schwingarmes (109) ein Pleuel (107) aufweisen, das einerseits mit dem Schwingarm (109) anderseits mit einem Exzenterzapfen (70) gelenkig verbunden ist, der zur Umlaufbewegung von einem Motor (106) angetrieben ist (Fig.5,6).

17. Vorrichtung nach Anspruch 16, dadurch gekennzeichnet, daß der Motor (106) für die Verschwenkung des Schwingarmes (109) derselbe ist, welcher für die Hin- und Herverschiebung des Trägers (61) dient (Fig.5,6).

18. Vorrichtung nach einem der Ansprüche 1 bis 17, dadurch gekennzeichnet, daß das Band (58) ein von mehreren Platten (93) gebildetes Gliederband ist, wobei die Platten an ihrer einen Seite mit die Vertiefungen (92) bildenden Ausnehmungen (94) versehen sind.

19. Vorrichtung nach Anspruch 18, dadurch gekennzeichnet, daß die eine Vertiefung (92) bildenden Ausnehmungen (94) über mehr als eine Platte (93) reichen.

20. Vorrichtung nach einem der Ansprüche 1 bis 17, dadurch gekennzeichnet, daß das Band (58) ein mit den Vertiefungen (92) versehener Geweberiemen, vorzugsweise aus Kunststoff, ist, der vorzugsweise mit einer Verzahnung oder einer Lochreihe (116) zur Mitnahme durch eine Verzahnung (117) der angetriebenen Umlenkwalze (60) versehen ist (Fig.7).

## Claims

1. A device for kneading portioned dough pieces, having a frame in which there is mounted a drum which rotates continuously about a horizontal axis and whose casing has receiving openings for the dough pieces, and having a kneading tool which is mounted on a bearer - the latter preferably located above the drum - and is provided with a cavity which, during the kneading process, executes a circular movement relative to the neighbouring receiving opening and in addition to this movement is, during the kneading process, moved along with the circumferential movement of the drum, characterised in that the kneading tool (39) is a band (58) provided with a plurality of cavities (92) which is driven to execute the rotatory movement in the direction of rotation of the drum (5) in such a manner that one of its cavities (92) is always opposite a receiving opening (12) of the drum (5), and in that this band (58) is guided over at least two deflection sites, preferably deflection rollers (59, 60), which are arranged on the bearer (61) and are displaced in relation to one another in the circumferential direction of the drum (5) and the band is driven to execute a circular kneading movement of its cavity (22) relative to the receiving opening (12) of the drum (5), the bearer (61) being mounted in the frame (1) so as to be displaceable normal to the running direction of the band (58).

2. A device in accordance with Claim 1, characterised in that in addition to its rotatory movement the band (58) is driven to execute a to-and-fro movement which is in the same direction as the rotatory movement and superimposed thereon, and in that the bearer (61) is driven by a drive (104) to execute a to-and-fro movement directed normal thereto, the to-and-fro movement of the band (58) and the transverse displacement of the band (58) caused by the displacement of the bearer (61) together forming the circular kneading movement of the band.

3. A device in accordance with Claim 2, characterised in that the band (58) has drivers, e.g. a row of holes (116) or fluting, or is connected to a member having a driver, e.g. a link chain (26) [number almost illegible], which drivers are - for the rotatory movement of the band (58) - driven by a driving wheel (99), for example a toothed wheel, which is mounted on the bearer (61) and is driven to execute rotational movement.

4. A device in accordance with Claim 3, characterised in that the driving wheel (99) is arranged coaxial to one of the deflection rollers (59, 60) and is preferably driven by it.

5. A device in accordance with any one of Claims 1 to 4, characterised in that the band (58) is - at a distance from the circumference (40) of the drum (5) - guided by means of at least one connecting region, e.g. a longitudinal groove (101), secured to the bearer (61)

6. A device in accordance with Claim 5, characterised in that the band (58) is - at at least one of its lateral edges (97) - connected to a link chain (96) provided with lateral extensions (100) which slide in a longitudinal groove (101) of a bearer cheek (102) laterally accompanying the band (58).

7. A device in accordance with any one of Claims 1 to 6, characterised in that two deflection rollers (59, 60) for the band (58) are mounted on the bearer (61) at at least that distance from one another by which two neighbouring receiving openings (12) of the drum (5) are spaced apart.

8. A device in accordance with Claim 7, characterised in that the band (58) extends along the circumference (40) of the drum (5) over at least 45°, preferably approximately 60 to 80°.

9. A device in accordance with any one of Claims 1 to 8, characterised in that the bearer (61) is displaceably mounted on a profiled shaft (64) - running parallel to the shaft (4) of the drum (5) - in the longitudinal direction thereof, via which profiled shaft the introduction of the energy for the rotatory movement of the band (58) takes place and which profiled shaft is rotatably mounted in the frame (1) and is connected to a drive.

10. A device in accordance with Claim 9, characterised in that one end of the bearer (61) is displaceably mounted on the profiled shaft (64) and in that the other end of the bearer (61) is - by means of rolling bodies, in particular rollers (62) - mounted in a guide device, in particular a guide rail (63), of the frame (1), which guide device runs parallel to the profiled shaft (64).

11. A device in accordance with Claim 9 or 10, characterised in that the drive for the to-and-fro movement of the bearer (61) has an eccentric pin (70) connected to the latter via a connecting rod (67), which eccentric pin is driven to execute rotatory movement by a motor (6) arranged in or on the frame (1).

12. A device in accordance with Claim 11, characterised in that the eccentric pin (70) is driven by a toothed disc (73) which is rotatably mounted onto the shaft (4) of the drum (5) and is connected to the toothed wheel (79) in a rotation-locking manner, this toothed wheel (79) and the toothed disc (73) preferably being on a sleeve (74) mounted onto the shaft (4) of the drum (5), which sleeve is - just like the toothed disc (11) connected to the shaft (4) of the drum (5) in a rotation-locking manner - driven by the motor (6).

13. A device in accordance with any one of Claims 9 to 12, characterised in that the drive of the profiled shaft (64) has a toothed wheel (86) which is preferably mounted coaxial to the shaft (4) of the drum (5), which meshes with a pinion (87) connected to the profiled shaft (64) and which is entrained in rotation - via a driver - (90) by a disc, in particular a toothed disc (11) or a sprocket wheel, connected in a rotation-locking manner to the shaft (4) of the drum (5), which driver (90) is, possibly by means of a connecting rod (85), connected to an eccentric pin (84) of a crank (83) which is rotatably mounted in the disc (11) and driven by a drive to execute a rotational movement.

14. A device in accordance with Claim 13, characterised in that the drive for the rotational movement of the disc (11) has a toothed wheel (79) rotationally mounted onto the shaft (4) of the drum (5), this toothed wheel meshing with a pinion (80) connected to the crank (83) and being driven by a drive for the to-and-fro displacement of the bearer (61).

15. A device in accordance with any one of Claims 1 to 12, characterised in that the drive (105) of the band (58) has - for its to-and-fro movement superimposed upon the rotatory movement - a swivel arm (109) which is pivotably mounted on the bearer (61) and on which there is rotatably mounted a driving wheel, preferably a sprocket wheel (112), for driving the band (58) in the circumferential direction of the drum (5), and in that means for pivoting the swivel arm (109) in time with the displacement of the bearer (61) are present.

16. A device in accordance with Claim 15, characterised in that the means for pivoting the swivel arm (109) have a connecting rod (107) which on the one hand is connected in an articulated manner to the swivel arm (109) and on the other hand is connected in an articulated manner to an eccentric pin (70) which is driven to execute a rotatory movement by a motor (106) (Figs. 5, 6).

17. A device in accordance with Claim 16, characterised in that the motor (106) for pivoting the swivel arm (109) is the same which serves to displace the bearer (61) to and fro (Figs. 5, 6).

18. A device in accordance with any one of Claims 1 to 17, characterised in that the band (58) is a link band formed from a plurality of plates (93), one side of the plates being provided with the recesses (94) forming cavities (92).

19. A device in accordance with Claim 18, characterised in that the recesses (94) forming a cavity (92) extend over more than one plate (93).

20. A device in accordance with any one of Claims 1 to 17, characterised in that the band (58) is a fabric belt provided with the cavities (92), preferably of a synthetic material, which is preferably provided with toothing or a row of holes (116) for the purposes of entrainment by means of toothing (117) on the driven deflection roller (60) (Fig. 7).

## Revendications

1. Appareil pour pétrir des portions individuelles de pâte, comportant un bâti, dans lequel tourne en continu, autour d'un axe horizontal, un tambour comportant sur sa surface cylindrique des ouvertures de réception pour les portions de pâte, ainsi qu'un dispositif de pétrissage placé sur un support situé de préférence au-dessus du tambour, et comportant un renfoncement qui décrit, lors de l'action de pétrissage, un mouvement orbital par rapport à l'ouverture de réception située en face, et qui, en plus de ce mouvement orbital du processus de pétrissage, tourne en suivant le déplacement périphérique du tambour, caractérisé en ce que le dispositif de pétrissage (39) est une bande transporteuse (58), comportant plusieurs renfoncements (92), entraînée en rotation dans le sens de déplacement du tambour (5), de telle sorte que l'un de ses renfoncements (92) se trouve toujours en face d'une ouverture de réception (12) du tambour (5), et en ce que cette bande transporteuse (58) passe en deux points de renvoi au moins, décalés l'un par rapport à l'autre selon la circonférence du tambour (5) et disposés sur le support (61), de préférence des rouleaux de renvoi (59, 60), son renfoncement (22) étant animé d'un mouvement orbital de pétrissage par rapport à l'ouverture de réception (12) du tambour (5), le support (61) étant monté de façon à pouvoir se déplacer dans le bâti (1) perpendiculairement à la direction de déplacement de la bande transporteuse (58).

2. Appareil selon la revendication 1, caractérisé en ce que la bande transporteuse (58), en plus de son mouvement de rotation, est entraînée en un mouvement de va-et-vient superposé au précédent et dans la même direction, et en ce que le support (61), par son moyen d'entraînement (104), est soumis à un mouvement de va-et-vient perpendiculaire au précédent, le mouvement de va-et-vient longitudinal de la bande transporteuse (58) s'ajoutant au déplacement latéral de la bande transporteuse (58) provoqué par le déplacement du support (61) pour donner le mouvement orbital de pétrissage.

3. Appareil selon la revendication 2, caractérisé en ce que la bande transporteuse (58) présente un moyen d'entraînement, par exemple un alignement de perforations (116) ou des cannelures, ou bien est reliée à une pièce comportant un moyen d'entraînement, par exemple une chaîne articulée (26), ledit moyen d'entraînement étant actionné par une roue d'entraînement réceptrice (99), par exemple une roue dentée, fixée sur le support (61) et assurant la rotation de la bande transporteuse (58).

4. Appareil selon la revendication 3, caractérisé en ce que la roue motrice (99) est disposée selon le même axe que l'un des rouleaux de renvoi (59, 60) et est, de préférence, entraînée par celui-ci.

5. Appareil selon l'une quelconque des revendications 1 à 4, caractérisé en ce que la bande transporteuse (58) est guidée par au moins une glissière fixée au support (61), par exemple une rainure longitudinale (101), espacée de la circonférence (40) du tambour (5).

6. Appareil selon la revendication 5, caractérisé en ce que la bande transporteuse (58) est reliée par au moins un de ses bords latéraux (97) à une chaîne articulée (96) comportant des prolongements latéraux (100) qui coulissent dans une rainure longitudinale (101) d'une face latérale (102) du support (61) parallèle à la bande transporteuse (58).

7. Appareil selon l'une quelconque des revendications 1 à 6, caractérisé en ce que deux rouleaux de renvoi (59, 60) de la bande transporteuse (58) montés sur le support (61) sont écartés l'un de l'autre d'une distance au moins égale à celle qui sépare deux ouvertures de réception (12) consécutives du tambour (5).

8. Appareil selon la revendication 7, caractérisé en ce que la bande transporteuse (58) s'étend le long de la circonférence (40) du tambour (5) sur au moins 45°, de préférence entre 60 et 80° environ.

9. Appareil selon l'une quelconque des revendications 1 à 8, caractérisé en ce que le support (61) est monté de façon à pouvoir se déplacer dans le sens longitudinal sur un arbre profilé (64), parallèle à l'arbre (4) du tambour (5) qui assure la transmission de la force d'entraînement en rotation de la bande transporteuse (58), qu'il est fixé tout en pouvant tourner dans le bâti (1) et qu'il est relié à un moteur d'entraînement.

10. Appareil selon la revendication 9, caractérisé en ce que le support (61) est fixé par l'une de ses extrémités sur l'arbre profilé (64) tout en pouvant coulisser, et en ce que le support (61), à son autre extrémité, est monté sur des roulements, en particulier sur des galets (62), dans une glissière disposée parallèlement à l'arbre profilé (64), en particulier dans un rail de guidage (63) du bâti (1).

11. Appareil selon l'une ou l'autre des revendications 9 et 10, caractérisé en ce que l'entraînement pour le mouvement de va-et-vient du support (61) comporte un excentrique (70), auquel il est relié par l'intermédiaire d'une bielle (67) qui est entraînée en rotation par un moteur (6) disposé sur - ou dans - le bâti (1).

12. Appareil selon la revendication 11, caractérisé en ce que l'excentrique (70) est entraîné par un disque denté (73) mis en rotation sur l'arbre (4) du tambour (5), verrouillé en rotation avec la roue dentée (79), dans lequel ladite roue dentée et le disque denté (73) sont montés, de préférence, sur un manchon (74) disposé sur l'arbre (4) du tambour (5), ce manchon (74) étant également entraîné par le moteur (6) comme le disque denté (11) verrouillé en rotation sur l'arbre (4) du tambour (5).

13. Appareil selon l'une quelconque des revendications 9 à 12, caractérisé en ce que l'entraînement de l'arbre profilé (64) comprend une roue dentée (86) tournant, de préférence, sur le même axe que l'arbre (4) du tambour (5), ladite roue dentée étant en prise avec un pignon (87) monté sur l'arbre profilé (64) et entraînée en rotation par un doigt d'entraînement (90) d'un disque verrouillé en rotation sur l'arbre (4) du tambour (5), en particulier un disque denté (11) ou une roue a chaîne, ledit doigt d'entraînement étant relié, le cas échéant, par l'intermédiaire d'une bielle (85) à l'excentrique (84) d'une manivelle (83) montée sur palier dans le disque (11) et qui est mise en rotation par un moyen d'entraînement.

14. Appareil selon la revendication 13, caractérisé en ce que le moyen d'entraînement pour la rotation du disque (11) comporte une roue dentée (79) montée en rotation sur l'arbre (4) du tambour (5) et qui est en prise avec un pignon (80) relié à la manivelle (83), ledit pignon étant commandé par un entraînement pour donner le mouvement de va-et-vient du support (61).

15. Appareil selon l'une quelconque des revendications 1 à 12, caractérisé en ce que l'entraînement (105) de la bande transporteuse (58) présente un bras oscillant (109) monté tout en pouvant osciller sur le support (61) pour donner le mouvement de va-et-vient superposé à son mouvement de rotation, sur lequel une roue d'entraînement, de préférence une roue à chaîne (112) servant à l'entraînement de la bande transporteuse (58), est montée en rotation dans le sens de déplacement périphérique du tambour (5), et en ce que des moyens sont prévus pour l'entraînement du bras oscillant (109) en synchronisme avec le déplacement du support (61).

16. Appareil selon la revendication 15, caractérisé en ce que les moyens pour l'entraînement du bras oscillant (109) comportent une bielle (107) qui est reliée d'un côté au bras oscillant (109) et de l'autre côté à l'excentrique (70) par l'intermédiaire d'une articulation, et qui est entraîné en rotation par un moteur (106) (Fig. 5 et 6).

17. Appareil selon la revendication 16, caractérisé en ce que le moteur (106) servant à actionner le bras oscillant (109) est le même que celui qui sert au mouvement de va-et-vient du support (61) (Fig. 5, 6).

18. Appareil selon l'une quelconque des revendications 1 à 17, caractérisé en ce que la bande transporteuse (58) est une bande articulée constituée de plusieurs plaques (93), les plaques présentant sur l'un de leurs côtés les évidements (94) formant les renfoncements (92).

19. Appareil selon la revendication 18, caractérisé en ce que les évidements (94) formant des renfoncements (92) s'étendent sur plus d'une plaque (93).

20. Appareil selon l'une quelconque des revendications 1 à 17, caractérisé en ce que la bande transporteuse (58) est une courroie tissée comportant des renfoncements (92), de préférence en plastique, et qui, de préférence, comporte un alignement de perforations (116) afin d'être entraînée par les dents (117) du rouleau de renvoi (60) entraîné (Fig. 7).
